# EUROPEAN PATENT APPLICATION

(11) **EP 3 284 725 A1**
(43) Date of publication of application: **21.02.2018**
(21) Application number: 16192968.2
(22) Date of filing: 08.10.2016
(51) Int. Cl.: C02F 1/38, B01D 17/02, C10G 9/00, C02F 103/18, C02F 103/36

(54) **SYSTEM AND METHOD FOR PROCESSING LIQUID FROM A QUENCH WATER TOWER**

(30) Priority: 19.08.2016 US 201615241099
(71) Applicant: Linde Engineering North America Inc., Blue Bell, PA 19422 (US)
(72) Inventor: WHITNEY, Mark, Houston, TX 77043 (US)
(74) Representative: Hofmann, Andreas

(57) **Abstract**

In order to overcome the limitations and problems that earlier systems have experienced, a system for processing liquid (114) from a quench water tower (110) comprises
- a quench water tower (110);
- a first pipe (125) for removing the liquid (114) from the quench water tower (110);
- a hydrocyclone (122) in fluid communication with the first pipe (125) and in which the liquid (114) is separated into particulate (138) and liquid (54) constituents by centrifugal force; and
- an oil-water separator (118) downstream of and in fluid communication with a first outlet of the hydrocyclone (122).

A related apparatus and method are also provided.

## Description

### Technical field of the present invention

The present invention relates to a system for processing liquid from a quench water tower.

The present invention further relates to a method of processing liquid from a quench water tower.

### Technological background of the present invention

Referring by way of example only to a known ethylene plant using a light feed stock, it is common practice to use a quench water tower 10 to cool furnace effluent 12 and remove hydrocarbons therein with high boiling points.

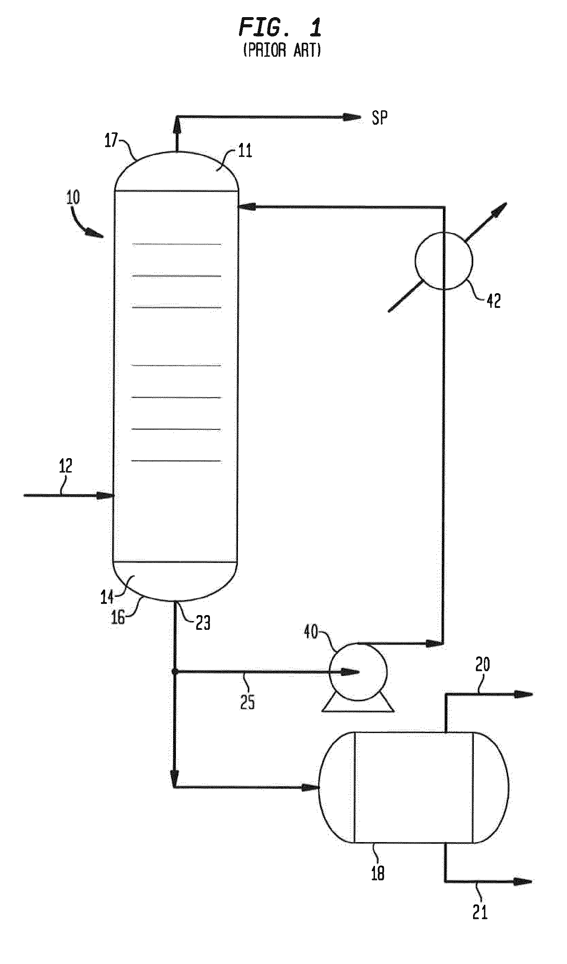

In such an arrangement shown for example in FIG. 1, the incoming furnace effluent 12, after being cooled in heat exchangers (not shown), enters the quench water tower 10 where the gas is further cooled by direct contact with quench water. In the quench water tower 10, water contained in the furnace effluent 12 is largely condensed. In addition, some high-boiling hydrocarbons are also condensed.

Liquids 14 at a bottom 16 of the quench water tower 10 include the quench water and condensed water, with condensed hydrocarbons present therein. The liquid is separated, with approximately 95 percent being cooled and recycled to the quench water tower 10 as quench water. The remaining portion goes to an oil-water separator 18 (or separator 18) where the hydrocarbons are drawn off.

The water from the separator 18 goes to water processing 20 where the water is purified before being recycled into the process as a dilution stream or sent to waste water treatment. The furnace effluent 12 also contains a small quantity of solids, typically coke particles. These solids and heavy oils are removed in a stream 21 after settling in the separator 18.

The heavy oils and the solids 21 must accumulate in the circulating quench water because only four percent to five percent of the liquid 14 from the quench water tower 10 goes to the separator 18. Therefore, the concentration of the heavy oils and solids 21 in the circulating quench water is 20 times to 25 times the feed concentration to the quench water tower 10.

This high concentration of solids and heavy hydrocarbons causes fouling in the quench water tower 10. The fouling reduces the tower performance and can causes premature shut-down of the plant for which the quench water tower 10 is associated.

A pump 40 is provided to deliver the liquids 14 from an outlet 23 at the bottom 16 of the quench water tower 10 through a pipe 25 to a heat exchanger 42 to cool the liquids 14 prior to return of same to the quench water tower 10.

As shown in FIG. 1, pipes or lines of known construction can connect the bottom 16 with the pump 40 and the separator 18, the pump 40 and the heat exchanger 42 with the quench water tower 10.

A top 17 of the quench water tower 10 includes an ullage space 11 from which gases in the space can be removed, vented or exhausted from the quench tower 10 for subsequent use or subsequent processing (= reference numeral SP in FIG. 1) such as for example to charge a gas compressor (not shown).

Heavy hydrocarbons contained in the quench water tower 10 can become solid at temperatures present in heat exchangers that cool the quench water. The solidified hydrocarbons reduce the ability of these heat exchangers to provide cooling, thereby reducing both plant efficiency and capacity. Fouling by such cooling in a conventional quench water system has been reported by operating companies.

The furnace effluent 12 also contains a small quantity of solids, typically coke particles. These solids and heavy oils are removed by settling out in the separator 18.

The heavy oils and the solids 21 accumulate in the circulating quench water because only four percent to five percent of the liquid from the quench water tower 10 goes to the separator 18. Therefore, the concentration of the heavy oils and solids in the circulating quench water is 20 times to 25 times the feed concentration to the quench tower.

This high concentration of solids and heavy hydrocarbons causes fouling in the quench water tower 10. The fouling reduces the tower performance and can causes premature shut-down of the plant for which the quench water tower 10 is associated.

### Disclosure of the present invention: object, solution, advantages

Starting from the disadvantages and shortcomings as described above as well as taking the prior art as discussed into account, an object of the present invention is to overcome the limitations and problems that earlier systems, apparatus and methods have experienced.

This object is accomplished by a system comprising the features of claim 1 as well as by an apparatus comprising the features of claim 7 as well as by a method comprising the features of claim 8. Advantageous embodiments, expedient improvements and other optional features of the present invention are set forth herein and disclosed in the respective dependent claims.

The present invention basically provides for a system for processing liquid from a quench water tower, comprising a quench water tower; a first pipe for removing the liquid from the quench water tower; a hydrocyclone in fluid communication with the first pipe and in which the liquid is separated into particulate and liquid constituents by centrifugal force; and an oil-water separator downstream of and in fluid communication with a first outlet of the hydrocyclone.

According to an advantageous embodiment of the present invention, a second line or pipe may be provided in fluid communication with a second outlet of the hydrocyclone and an inlet of the quench water tower through which the liquid constituent, in particular the low density stream or quench water stream, may be returned to said quench water tower.

In an expedient embodiment of the present invention, at least one cooling apparatus, in particular at least one heat exchanger or at least one quench water cooler, may coact with the second pipe in order to cool the liquid constituent passing through said second pipe.

According to a favoured embodiment of the present invention, a pump may be in fluid communication with the first pipe for moving the liquid from the quench water tower through the first pipe to the hydrocyclone.

In a preferred embodiment of the present invention, a third pipe may be provided in fluid communication with the oil-water separator for removing process water therefrom; said process water may be purified before being recycled into the process as a dilution stream or sent to waste water treatment.

Independently thereof or in connection therewith, a fourth pipe may be provided in fluid communication with the oil-water separator for removing heavy oils and solids therefrom, with the furnace effluent also containing a small quantity of such solids, typically coke particles. These heavy oils and solids may be removed in a stream after settling in the separator.

There is also provided herein an apparatus downstream of and for processing liquid from a quench water tower, comprising a first pipe for removing the liquid from the quench water tower; a hydrocyclone in fluid communication with the first pipe and in which the liquid is separated into particulate and liquid constituents by centrifugal force; and an oil-water separator downstream of and in fluid communication with a first outlet of the hydrocyclone.

There is further provided herein a method of processing liquid from a quench water tower, comprising removing the liquid from the quench water tower; exerting a centrifugal force on the liquid with a hydrocyclone for separating said liquid into particulate and liquid constituents; and further separating the particulate and liquid constituents downstream of the exerting centrifugal force.

According to an advantageous embodiment of the present invention, the liquid constituent, in particular the low density stream or quench water stream, may be returned to the quench water tower.

In an expedient embodiment of the present invention, the particular constituent may be directed to the further separating, in particular into process water and heavy oils and solids.

According to a favoured embodiment of the present invention, the liquid comprises a waste stream from a chemical processing plant, in particular from an ethylene plant, for example from an ethane-cracking ethylene plant.

In a preferred embodiment of the present invention, any gas may be removed, vented or exhausted from an ullage above the liquid in said quench water tower and from said ullage for subsequent use or subsequent processing, in particular for charging at least one gas compressor.

The present invention may be used in at least one chemical processing plant, in particular in at least one ethylene plant, for example in at least one ethane-cracking ethylene plant, said chemical processing plant employing at least one light feed stock, wherein the quench water tower is used to cool the furnace effluent and/or remove hydrocarbons, in particular having high boiling points.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 8; further improvements, features and advantages of the present invention are explained below in more detail with reference to particular and preferred embodiments by way of nonlimiting example and to the appended drawing figures taken in conjunction with the following description of exemplary embodiments, of which:
- FIG. 1: shows a schematic of a known quench water tower system to cool furnace effluent;
- FIG. 2: shows a schematic of a quench water hydrocyclone system and apparatus embodiment according to the present invention, said system and apparatus embodiment working according to the method of the present invention; and
- FIG. 3: shows a perspective view of a hydrocyclone apparatus embodiment, which can be used in the quench water hydrocyclone system and apparatus embodiment of FIG. 2.

In the appended drawing figures, like equipment is labelled with the same reference numerals throughout the description of FIG. 1 to FIG. 3.

### Detailed description of the drawings; best way of embodying the present invention

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways. Also, it is to be understood that the phraseology or terminology employed herein is for the purpose of description and not of limitation.

In the description above and below, terms such as horizontal, upright, vertical, above, below, beneath and the like, are used solely for the purpose of clarity illustrating the present invention and should not be taken as words of limitation. The drawings are for the purpose of illustrating the present invention and are not intended to be to scale.

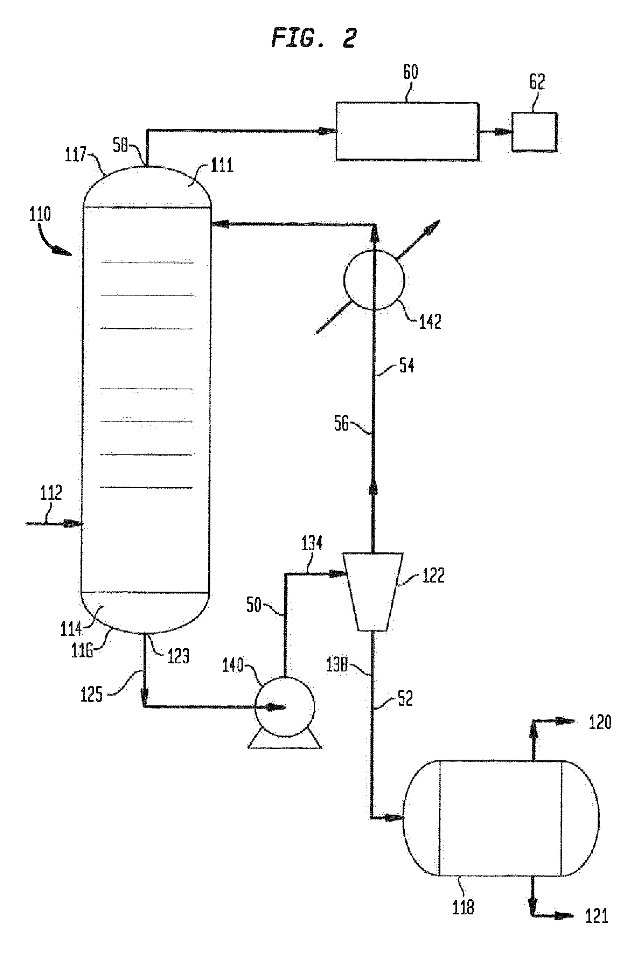

Referring in FIG. 2 by way of example only to an ethylene plant 62 using a light feed stock, it is common practice to use a quench water tower 110 to cool furnace effluent 112 and remove hydrocarbons therein with high boiling points.

In such an arrangement shown in FIG. 2, the incoming furnace effluent 112, after being cooled in heat exchangers (not shown), enters the quench water tower 110 where the gas is further cooled by direct contact with quench water. In the quench water tower 110, water contained in the furnace effluent 112 is largely condensed. In addition, some high-boiling hydrocarbons are also condensed.

Liquids 114 at a bottom 116 of the quench water tower 110 include the quench water and condensed water, with condensed hydrocarbons present therein. The liquid is separated, with approximately 95 percent being cooled and recycled to the quench water tower 110 as quench water. The remaining portion goes to an oil-water separator 118 (or separator 118) where the hydrocarbons are drawn off.

The water from the separator 118 goes to water processing 120 where the water is purified before being recycled into the process as a dilution stream or sent to waste water treatment. The furnace effluent 112 also contains a small quantity of solids, typically coke particles. These solids and heavy oils are removed in a stream 121 after settling in the separator 118.

In more detail, the total "bottoms" or liquids 114 from the quench water tower 110, which include quench water, process water, heavy oils and solids, are delivered from an outlet 123 of the tower 110 into a pipe 125 in fluid communication with a pump 140 and through a line 134 to a hydrocyclone 122 by the pump 140. The quench water tower 110 resembles a tank or a vessel.

The pump 140 is provided to deliver the liquids 114 from the bottom 116 of the quench water tower 110 to the hydrocyclone 122. Downstream of said pump 140, the waste stream 50 moving through the line 134 contains the quench water, the process water and all heavy oils and solids, and is separated by centrifugal force in the hydrocyclone 122.

As shown in FIG. 2, pipes or lines can connect the bottom 116 with the pump 140 and the hydrocyclone 122, and can connect the hydrocyclone 122 with the separator 118, the heat exchanger 142 with the quench water tower 110.

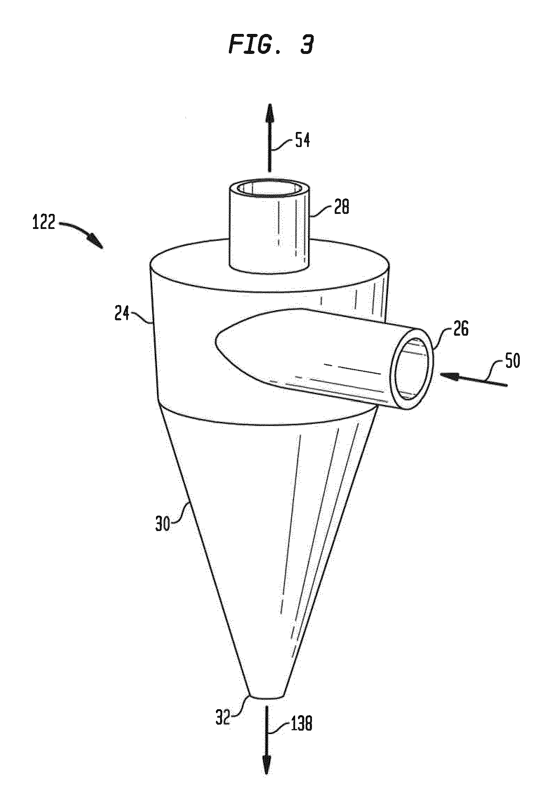

Referring to FIG. 3 and by way of example only to the hydrocyclone 122 (also referred to herein as a "cyclone"), such is a device to separate particles in a liquid suspension based upon a ratio of the particles centripetal force to fluid resistance. This ratio is high for dense particles (where separation by density is required) and coarse particles (where separation by size is required), and low for light and fine particles. Hydrocyclones also find application in the separation of liquids having different densities.

The hydrocyclone 122 as shown in FIG. 3 is constructed with a cylindrical section 24 at the top into which the liquid stream or liquid, namely the waste stream 50, is fed tangentially through an inlet 26, and a conical base 30. The angle, and hence length, of the conical base 30 plays a role in determining operating characteristics of the hydrocyclone 122.

A feed (of waste, for example) is introduced into the hydrocyclone 122 through the inlet 26 such that cyclonic action of the cyclone 122 produces
- a high density stream 138 leaving the cyclone 122 through an outlet 32 of the conical base 30, and
- a low density stream 54 leaving the cyclone 122 through an outlet 28 of the cylindrical section 24.

Referring again to FIG. 2, the high density stream or heavy stream 138 leaving an outlet of the hydrocyclone 122 contains all the process water, all heavy oils and solids, and is sent through a line 52 to the oil-water separator 118.

The remaining water from the hydrocyclone 122 is the quench water, which is now free of heavy oils and solids and can therefore be recirculated through a line 56 as the low density stream or quench water stream 54 to a heat exchanger 142 and thereafter to the quench water tower 110. The embodiment of FIG. 2 can be used for example in an ethane-cracking ethylene plant 62.

Separation of the liquid stream 50 in the hydrocyclone 122 into particulate and liquid constituents results in a particulate laden heavy stream 138 directed in the line 52 to the oil-water separator 118 from the outlet 32 of the hydrocyclone 122, and the quench water stream 54 which is directed through a line 56 from the outlet 28 of the hydrocyclone 122 to the heat exchanger 142 and to the quench water tower 110.

At least one and in certain applications a plurality of quench water heat exchangers 142 or coolers coact with the line 56 to cool the quench water from the hydrocyclone 122 before the quench water is fed into the tower 110.

As used herein, the term "ullage" may refer to an amount of a tank or container not being full.

A top 117 of the quench water tower 110 includes an ullage space 111. Cooled furnace(s) gases in said ullage space 111, which now have a reduced water content and are without solids and heavy hydrocarbons, are removed, vented or exhausted from the upper portion of the column through a nozzle 58, for example. The gases from the ullage space 111 are delivered for subsequent use or subsequent processing to a charge gas compressor 60 and then to the ethylene plant 62 for further processing.

The present embodiments can be applied to quench water towers that use multiple quench water loops. The hydrocyclones can serve to concentrate the heavy oils into the hotter sections of the loops to avoid fouling cooling exchangers.

Some gas crackers use either a separate vessel or the lowest section of the quench water tower 110 to saturate the incoming furnace effluent with water. The water used in these systems is separate from the quench water used to cool the furnace effluent. A large portion of the circulating water from the saturator is vaporized by the furnace effluent and is condensed by the circulating quench water.

In these plants, a hydrocyclone could be used on the quench water. The hydrocyclone would remove heavy oils and solids from the quench water and return same, along with the condensed water from the saturator, to the saturator system. This would prevent fouling of quench water cooling exchangers.

While the quench water hydrocyclone 122 can be used in new constructions, it has advantages for use as a retrofit to an existing plant. For example, the process water effluent from the hydrocyclone can be sent to an oil-water separator 118 which is disposed at a remote location from the quench water tower. Most conventional plants place the oil-water separator next to the quench water tower so the separator can be fed by gravity.

The integration of a cyclone improves significantly the quench water quality because
i) the quench water can be cooled without concern that the heavy oils will solidify and foul the exchangers,
ii) the oil content is significantly reduced in the quench water bottoms, which reduces the possibility of fouling of the quench water tower bottoms, and
iii) solids are voided which would otherwise foul the quench water coolers and the quench water tower.

It will be understood that the embodiments described herein are merely exemplary, and that a person skilled in the art may make variations and modifications without departing from the spirit and scope of the present invention. All such variations and modifications are intended to be included within the scope of the present invention as described above and defined the appended claims. Further, it should be understood that all embodiments disclosed are not necessarily in the alternative, as various embodiments of the present invention may be combined to provide the desired result.

### List of reference numerals

- 10: quench tower or quench water tower (= prior art; cf. FIG. 1)
- 11: ullage space or ullage (= prior art; cf. FIG. 1)
- 12: furnace effluent, especially cooled furnace effluent (= prior art; cf. FIG. 1)
- 14: liquid (= prior art; cf. FIG. 1)
- 16: bottom of quench tower or of quench water tower 10 (= prior art; cf. FIG. 1)
- 17: top of quench tower or of quench water tower 10 (= prior art; cf. FIG. 1)
- 18: oil-water separator (= prior art; cf. FIG. 1)
- 20: water processing or process water (= prior art; cf. FIG. 1)
- 21: heavy oils and solids, especially coke particles (= prior art; cf. FIG. 1)
- 23: outlet, especially of bottom 16, of quench tower or of quench water tower 10 (= prior art; cf. FIG. 1)
- 24: cylindrical section of hydrocyclone 122
- 25: line or pipe between outlet 23 and pump 40 (= prior art; cf. FIG. 1)
- 26: inlet of cylindrical section 24
- 28: outlet of cylindrical section 24
- 30: conical base of hydrocyclone 122
- 32: outlet of conical base 30
- 40: pump (= prior art; cf. FIG. 1)
- 42: cooling apparatus, especially heat exchanger or quench water cooler (= prior art; cf. FIG. 1)
- SP: subsequent use or subsequent processing (= prior art; cf. FIG. 1)
- 50: liquid stream or liquid, especially waste stream
- 52: line or pipe between hydrocyclone 122 and oil-water separator 118
- 54: liquid constituent or liquid stream or low density stream, especially quench water stream
- 56: line or pipe between hydrocyclone 122 and cooling apparatus 142
- 58: nozzle
- 60: gas compressor, in particular charge gas compressor
- 62: chemical processing plant, especially ethylene plant, for example ethane-cracking ethylene plant
- 110: quench tower or quench water tower
- 111: ullage space or ullage
- 112: furnace effluent, especially cooled furnace effluent
- 114: liquid
- 116: bottom of quench tower or of quench water tower 110
- 117: top of quench tower or of quench water tower 110
- 118: oil-water separator
- 120: water processing or process water
- 121: heavy oils and solids, especially coke particles
- 122: hydrocyclone
- 123: outlet, especially of bottom 116, of quench tower or of quench water tower 110
- 125: line or pipe between outlet 123 and pump 140
- 134: line or pipe between pump 140 and hydrocyclone 122
- 138: particulate constituent or heavy stream or high density stream
- 140: pump
- 142: cooling apparatus, especially heat exchanger or quench water cooler

## Claims

1. A system for processing liquid (114) from a quench water tower (110), comprising:
- a quench water tower (110);
- a first pipe (125) for removing the liquid (114) from the quench water tower (110);
- a hydrocyclone (122) in fluid communication with the first pipe (125) and in which the liquid (114) is separated into particulate (138) and liquid (54) constituents by centrifugal force; and
- an oil-water separator (118) downstream of and in fluid communication with a first outlet of the hydrocyclone (122).

2. The system according to claim 1, further comprising a second pipe (56) in fluid communication with a second outlet of the hydrocyclone (122) and an inlet of the quench water tower (110) through which the liquid constituent (54) is returned to said quench water tower (110).

3. The system according to claim 2, further comprising at least one cooling apparatus (142) coacting with the second pipe (56) for cooling the liquid constituent (54) passing through said second pipe (56).

4. The system according to at least one of claims 1 to 3, further comprising a pump (140) in fluid communication with the first pipe (125) for moving the liquid (114, 50) from the quench water tower (110) through the first pipe (125) to the hydrocyclone (122).

5. The system according to at least one of claims 1 to 4, further comprising a third pipe in fluid communication with the oil-water separator (118) for removing process water (120) therefrom.

6. The system according to at least one of claims 1 to 5, further comprising a fourth pipe in fluid communication with the oil-water separator (118) for removing heavy oils and solids (121) therefrom.

7. An apparatus downstream of and for processing liquid (114) from a quench water tower (110), comprising:
- a first pipe (125) for removing the liquid (114) from the quench water tower (110);
- a hydrocyclone (122) in fluid communication with the first pipe (125) and in which the liquid (114) is separated into particulate (138) and liquid (54) constituents by centrifugal force; and
- an oil-water separator (118) downstream of and in fluid communication with a first outlet of the hydrocyclone (122).

8. A method of processing liquid (114) from a quench water tower (110), comprising:
- removing the liquid (114) from the quench water tower (110);
- exerting a centrifugal force on the liquid (114) with a hydrocyclone (122) for separating said liquid (114) into particulate and liquid constituents; and
- further separating the particulate (138) and liquid (54) constituents downstream of the exerting centrifugal force.

9. The method according to claim 8, further comprising returning the liquid constituent (54) to the quench water tower (110).

10. The method according to claim 8 or 9, further comprising directing the particular constituent (138) to the further separating.

11. The method according to at least one of claims 8 to 10, further comprising separating the particular constituent (138) into process water (120) and heavy oils and solids (121).

12. The method according to at least one of claims 8 to 11, wherein the liquid (114) comprises a waste stream from a chemical processing plant (62).

13. The method according to claim 12, wherein the chemical processing plant (62) is an ethylene plant, in particular an ethane-cracking ethylene plant.

14. The method according to claim 12 or 13, wherein the chemical processing plant (62) employs at least one light feed stock, wherein the quench water tower (110) is used to cool furnace effluent (112) and/or remove hydrocarbons, in particular having high boiling points.

15. The method according to at least one of claims 8 to 14, further comprising removing, venting or exhausting any gas from an ullage (111) above the liquid (114) in said quench water tower (110) and from said ullage (111) for subsequent use or subsequent processing, in particular for charging at least one gas compressor (60).
